# EUROPÄISCHE PATENTSCHRIFT

(11) **EP 1 817 532 B1**
(45) Veröffentlichungstag und Bekanntmachung des Hinweises auf die Patenterteilung: **11.01.2012**
(21) Anmeldenummer: 05810277.3
(22) Anmeldetag: 08.11.2005
(51) Int. Cl.: F26B 11/04

(54) **DREHTROMMEL ZUR AEROBEN ERWÄRMUNG RIESELFÄHIGER FESTSTOFFE**
ROTARY DRUM FOR THE AEROBIC HEATING OF POURABLE SOLIDS
TAMBOUR ROTATIF POUR REALISER LE CHAUFFAGE AEROBIE DE SUBSTANCES SOLIDES APTES A L'ECOULEMENT

(30) Priorität: 16.11.2004 DE 102004051802; 20.05.2005 DE 102005023258
(43) Veröffentlichungstag der Anmeldung: 15.08.2007
(73) Patentinhaber: Röhren- und Pumpenwerk Bauer Gesellschaft mbH, 8570 Voitsberg (AT)
(72) Erfinder: EICHLER, Dieter, 83109 Grosskarolinenfeld (DE)
(74) Vertreter: Schmidt, Horst
(86) Internationale Anmeldenummer: PCT/DE2005/001995
(87) Internationale Veröffentlichungsnummer: WO 2006/053519

(56) Entgegenhaltungen:
- DE-B- 1 289 494
- DE-C- 360 442
- DE-C- 445 313
- DE-C- 861 237
- DE-C- 915 916
- DE-C- 967 068
- FR-A- 527 295
- US-A- 2 153 385
- US-A- 2 354 567
- US-A- 3 280 993

## Beschreibung

Gegenstand der Erfindung ist eine Drehtrommel, in der durch eine aerobe Erwärmung der hygienische Status von separierten rieselfähigen Feststoffen aus der Rindergülle so verändert wird, daß dieser als Einstreu in den Stallanlagen wieder verwendet werden kann.

Das Ziel der Erfindung ist eine hohe Beladung der für den Einbau in einen isolierten Container horizontal liegenden Trommel mit einem Füllgrad von 60-70%.

Erfindungsgemäß wird der eingefüllte Feststoff in einer Kammer aufgenommen und erst in die Trommel abgegeben, wenn kein Feststoff die Kammer umgibt.

Entscheidendes Element ist eine Klappe der Kammer, die sich nur in diesem Bereich öffnet und schließt. Liegt Feststoff von außen an ihr an, wird das Öffnen der Klappe verhindert.

Um trotz der über die Achse hinausgehenden Befüllung eine Belüftung zu ermöglichen, wird die Zuluft im Gegenstrom zur Förderrichtung des Feststoffes über das für den Feststoffaustrag erforderliche ringförmige Wehr angesaugt und durch eine feststehende Rohrleitung eintragsseitig wieder abgesaugt.

### Titel der Erfindung

### Drehtrommel zur aeroben Erwärmung rieselfähiger Feststoffe

### Anwendungsgebiet

Gegenstand der Erfindung ist eine Drehtrommel, in der durch eine aerobe Erwärmung eine Keimreduzierung und der Entzug von Wasser realisiert wird. Das Aufgabengebiet bezieht sich vorrangig auf die Behandlung von separierten rieselfähigen Feststoffen aus der Rindergülle. Dabei besteht die Aufgabe, den hygienischen Status des Feststoffes so zu verändern, daß dieser als Einstreu in den Stallanlagen wieder verwendet werden kann.

### Charakterisierung der bekannten technischen Lösungen

Drehtrommeln zur verschiedenartigen Behandlung von Materialien sind seit langem bekannt. Der Eintrag der schüttfähigen Feststoffe erfolgt, wie in den Schriften DE 26 34 220 C2
US 4 168 915
über Trichter. Die Befüllung einer horizontal liegenden Trommel ohne besondere Einbauten im Bereich der Beschickung ist daher nur bis etwa 35%, bezogen auf den Durchmesser der Trommel, möglich.

Um eine darüber hinausgehende Menge in die Trommel zu bekommen, sind in der Trommel eingebaute Schaufeln, Stau- und Leitbleche oder verschieden gestaltete Schnecken erforderlich. In der Patentschrift
DE 270 86 98
sind zu diesem Zweck eine Vielzahl ähnlicher Einbauten vorhanden.

Um über einen Saugzug die Belüftung der Trommel vom Eintrag zum Austrag hin zu ermöglichen, wurde in der
DE-PA 199 28 883.6
an der Austragsseite ein spiralförmiger Kanal angeordnet, der als Verschluß den auszutragenden Feststoff nutzt. Diese Lösung erfordert eine genaue

Dosierung der Menge des Eintrages und des Austrages. Anderenfalls wird die Trommel entweder überfüllt oder entleert. In dieser Schrift ist die Trommel bereits in einem Container untergebracht. Diese Anordnung hat den Vorteil, daß die Wärme aus dem biologischen Prozeß und die erwärmte Luft des Antriebsmotors sich gleichmäßig über dem Mantel der Trommel verteilt.

### Ziel der Erfindung

Das Ziel der Erfindung ist es, mit einer einfachen Vorrichtung einen Füllgrad, der für den Einbau in einen Container horizontal liegenden Trommel, von 60-70% zu erreichen. Weiterhin soll immer soviel Feststoff selbständig die Trommel verlassen, wie auf der Seite der Befüllung zugeführt wird.

Die Zuführung der für den mikrobiologischen Prozeß erforderlichen Luft ist so zu gestalten, daß über das Prinzip des Gegenstromes das behandelte Material mit der kalten, frischen Luft und im Bereich der Zuführung das Material mit der verbrauchten warmen Luft in Berührung kommt.

### Merkmale der Erfindung

Erfindungsgemäß wird der einzufüllende rieselfähige Feststoff in einer Kammer aufgenommen und erst in dem Bereich abgegeben, in dem kein Feststoff die Kammer umgibt. Entscheidendes Element ist dabei eine Klappe an der Kammer, die sich nur in diesem Bereich öffnet und schließt. Liegt Feststoff von außen an ihr an, kann sich die Klappe nicht öffnen.

Zur Durchführung dieses Vorganges gelangt der rieselfähige Feststoff an der Eintrittsseite der Drehtrommel über einen Trichter und eine zentrische Öffnung in einen Vorraum, der durch die äußere Seitenwand der Trommel und in einem Abstand von der dahinterliegenden inneren Seitenwand begrenzt ist. An der Trommelwand befindet sich zwischen diesen Wänden ein Einlaufkanal, der den Feststoff in Drehrichtung aufnimmt. In der inneren Seitenwand ist eine Öffnung vorhanden, die in eine, im Trommelraum liegende, Abwurfkammer führt.

Diese Kammer ist durch eine, sich in den Trommelraum öffnende, Klappe abgedeckt, die erst dann öffnet, wenn sich durch die Drehung der Trommel die Kammer in dem Bereich befindet, in dem kein Feststoff vorhanden ist. Beim Weiterdrehen schließt sich die Klappe wieder, bevor sie erneut in den Feststoff eintaucht.

Entsprechend der einzuführenden Menge an Feststoff können am Umfang der Trommel mehrere solcher Einrichtungen zum Eintragen des rieselfähigen Feststoffes vorhanden sein.

Die Zuluft wird im Gegenstrom zur Förderrichtung des Feststoffes über das für den Feststoffaustrag erforderliche ringförmige Wehr angesaugt. Die Absaugung erfolgt über eine feststehende achsial angeordneten Rohrleitung, die in der Nähe der Einfüllung des Feststoffes radial in den feststofffreien Bereich der Trommel geführt wird. Um eine Einfallen von Feststoffen in das Rohr zu vermeiden ist hier ein nach unten angeordneter Krümmer angebracht. Das Absaugrohr ist am Trichter befestigt. Ein Lüfter erzeugt den für die Bewegung der Luft erforderlichen Unterdruck.

### Ausführungsbeispiel

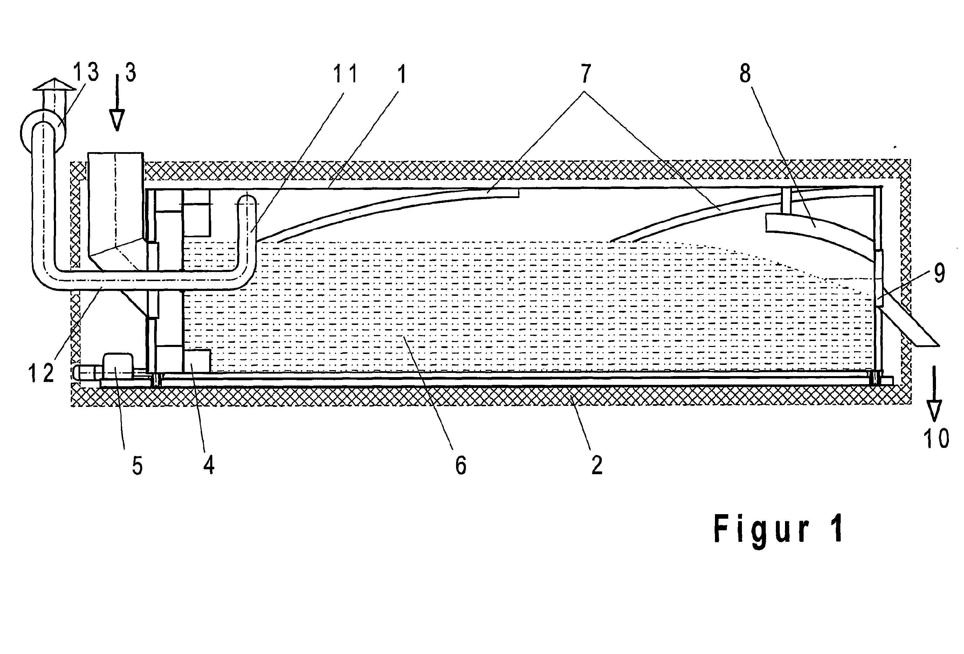

**Figur 1** zeigt einen Längsschnitt einer Drehtrommel (1), die in einen isolierten Container (2) eingebaut ist. Das zu behandelnde Gut (3) gelangt über die Befüllvorrichtung (4) in den Innenraum der Drehtrommel (1) die durch den Antrieb (5) in Drehung versetzt wird. Der rieselfähige Feststoff (6) wird durch die am Mantel der Trommel angebrachten Schaufeln (7) ständig in Richtung zum Austrag hin bewegt. Im Bereich des Austrages befinden sich in entgegengesetzter Richtung wirkende Leitbleche (8), die etwa mit einem Abstand von einem halben Radius vom Mantel entfernt befestigt sind. Sie stauen den Feststoff vor dem ringförmigen Austragswehr (9) an. Damit bleibt ein weiter Bereich des Trommelvolumens mit 65-75% Feststoff befüllt. Über das Austragswehr (9) wird nur soviel an Feststoff aus der Trommel ausgetragen, wie über die Befüllvorrichtung (4) zugeführt wird.
   Die Luft wird im Gegenstrom zum Feststoff durch das Austragswehr (9), über die Füllung (6) hinweg, durch die feststehende Entlüftungsleitung (11) und die nachfolgende achsiale Rohrleitung (12) aus dem System vom Lüfter (13) abgesaugt. Gegebenenfalls kann hier ein dem Stand der Technik entsprechendes Filtersystem nachgeschaltet werden.

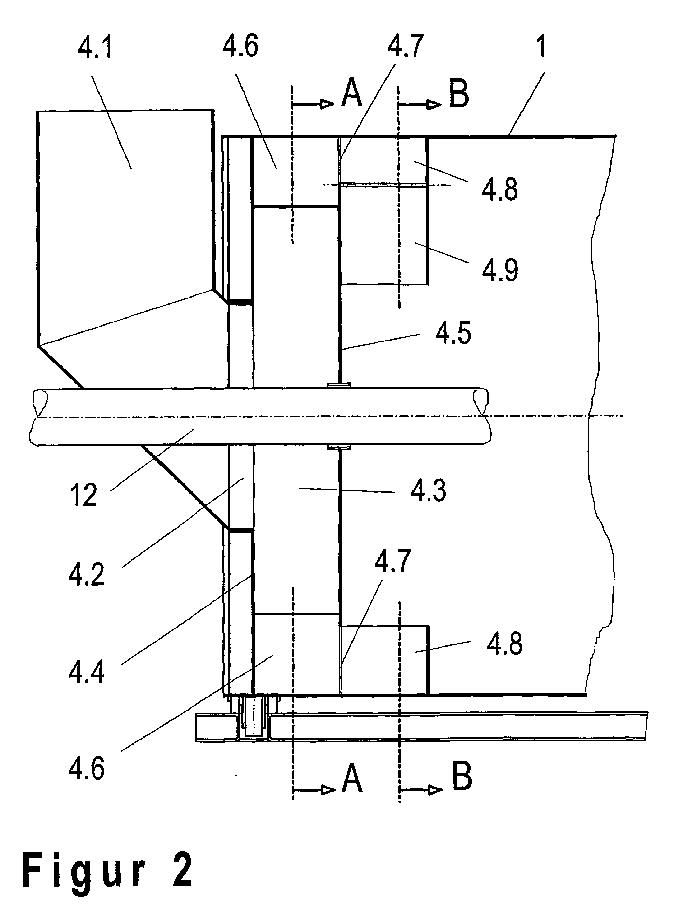

**Figur 2** zeigt im Achsschnitt der Trommel (1) die Befüllvorrichtung (4) an der Einlaufseite und die Lage der Schnitte A-A und B-B für die folgenden Figuren. Durch den Trichter (4.1) gelangt der feuchte, zu kompostierende Feststoff über die zentrische Öffnung (4.2) in den Vorraum (4.3) der von der Stirnwand (4.4) und der inneren Seitenwand (4.5) gebildet wird.
   In diesem Beispiel sind zum Einbringen zwei gegenüberliegende gleichgestaltete Eintragssysteme vorhanden.
   Bei der Drehung der Trommel wird der rieselfähige Feststoff von dem in Drehrichtung offenen Einlaufkanal (4.6) erfaßt und bei der weiteren Drehung der Trommel in den hinteren Bereich dieses Kanals befördert. Hier befindet sich an der inneren Seitenwand (4.5) eine Öffnung (4.7), durch die der Feststoff beim Weiterdrehen in die Abwurfkammer (4.8) gelangt.
   An der entsprechenden Seite besitzt diese Kammer eine Klappe (4.9), die sich erst dann öffnet, wenn die Kammer den Bereich der Trommel erreicht, in dem kein Feststoff vorhanden ist und so sich die Klappe erst hier öffnen kann. Eine weitere Bedingung der Lage der Klappe (4.9) ist, daß sie sich schließt, bevor sie wieder in den Feststoff eintaucht und im Feststoff geschlossen bleibt.
   Der besseren Übersicht wegen werden in den nachfolgenden Figuren die Bezugszeichen nur an einigen Stellen dargestellt.

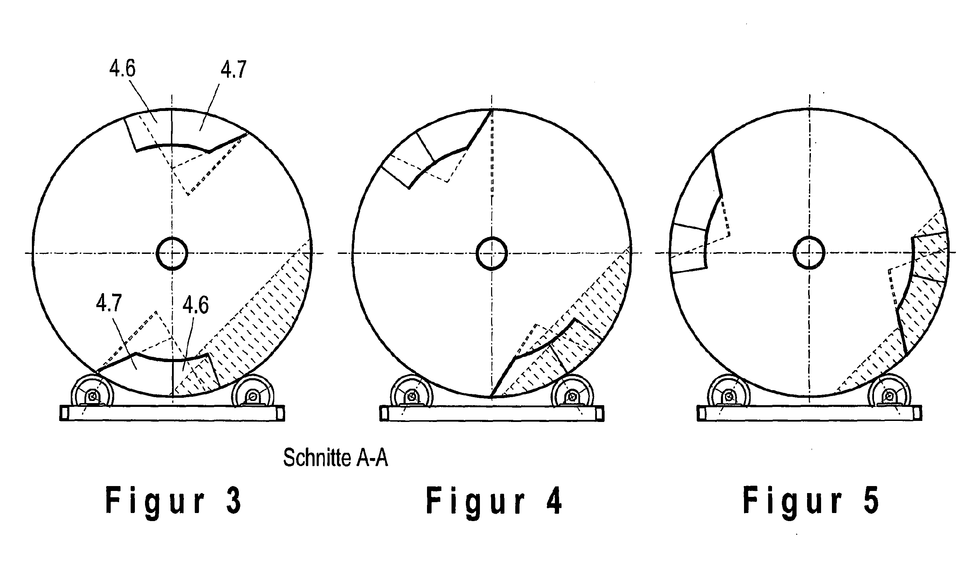

**Figur 3, 4 und 5** zeigen den in der Figur 1 dargestellten Schnitt A-A durch den Vorraum (4). Dabei ist die Trommel in der Figur 4 um etwa 33° und in der Figur 5 um weitere 45° weitergedreht. In der Figur 3 beginnt im unteren Eintragssystem der Feststoff in den Einlaufkanal (4.6) einzufließen. Im oberen Eintragssystem ist die Entleerung durch die Öffnung (4.7) bereits abgeschlossen. In der Figur 4 ist der Füllvorgang des Einlaufkanals (4.6) fast abgeschlossen und der Feststoff gelangt bereits durch die Öffnung (4.7) der inneren Seitenwand (4.5), in die nur gestrichelt dargestellte Abwurfkammer (4.8). In der Figur 5 rutscht nun soviel Feststoff aus dem Einlaufkanal (4.6) durch die Öffnung (4.7), wie die Abwurfkammer (4.8) fassen kann.

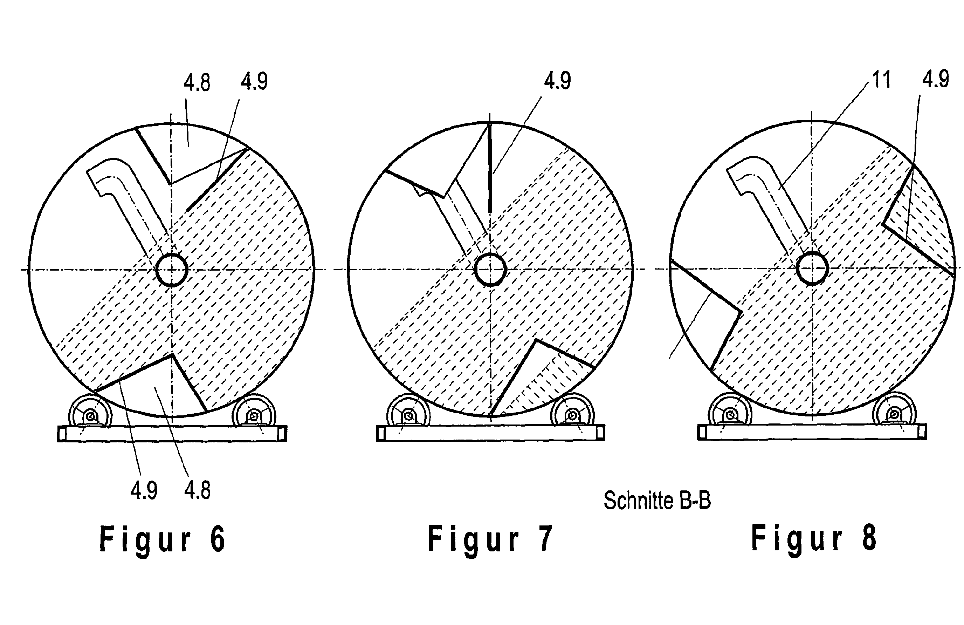

**Figuren 6,7 und 8** zeigen den in der Figur 2 dargestellten Schnitt B-B. Dabei ist die Trommel in der Figur 7 ebenfalls um etwa 33° und in der Figur 8 um weitere 45° weitergedreht. In der Figur 6 hat sich die Klappe (4.9) der Abwurfkammer (4.8) des gerade oben befindlichen Eintragssystems soeben geöffnet und der Feststoff ist in die Trommel gerutscht. Die Klappe des unten befindlichen Eintragssystems wird durch den anliegenden Feststoff zugehalten.
In Figur 7 hat die Klappe (4.9) des zur Zeit oben befindlichen Eintragssystems den größten Öffnungswinkel erreicht und beginnt sich durch sein Eigengewicht wieder zu schließen. In der Figur 8 beginnt der herabrieselnde Feststoff die bereits geschlossene Klappe (4.9) abzudecken. Im gegenüberliegenden Eintragssystem würde sich ohne Feststoff in der Trommel die zugehörige Klappe durch ihr Eigengewicht öffnen. Sie kann aber nicht aufgehen, da der immer noch fest anliegende Feststoff dies verhindert. Damit wird sein Inhalt in den Bereich befördert, in dem sich die Klappe durch das wegrieseln des Feststoffes wieder öffnen kann und so eine 60-70%ige Befüllung der Trommel ermöglicht.
   In dieser Figur ist weiterhin die aus dem feststofffreien Bereich der Trommel herausführende feststehende Entlüftungsleitung (11) mit seinem Krümmer zu erkennen.

## Patentansprüche

1. Drehtrommel zur aeroben Erwärmung von rieselfähigen Feststoff, in der der noch feuchte Feststoff ständig umgewälzt und Frischluft zugeführt wird, **dadurch gekennzeichnet, daß** der Feststoff an der Eintrittsseite der Drehtrommel (1) über den Trichter (4.1) und die zentrische Öffnung (4.2) in den Vorraum (4.3) gelangt, der durch die äußere Seitenwand (4.4) und in einem Abstand von der dahinterliegenden inneren Seitenwand (4.5) begrenzt ist und zwischen diesen Wänden an der Wand der Drehtrommel (1) ein Einlaufkanal (4.6) den Feststoff in Drehrichtung aufnimmt und in der inneren Seitenwand (4.5) eine Öffnung (4.7) vorhanden ist, die in eine, im Trommelraum liegende Kammer (4.8) führt, die durch eine sich in den Trommelraum öffnende Klappe (4.9) abgedeckt ist, die erst dann öffnet, wenn sich die Kammer (4.8) in dem Bereich der Drehtrommel (1) befindet, in dem kein rieselfähiger Feststoff vorhanden ist und sich wieder schließt, bevor diese wieder in den Feststoff eintaucht, die Frischluft über das ringförmige Austragswehr (9) für den rieselfähigen Feststoffe angesaugt und über das im Bereich der Befüllvorrichtung (4) befindliche Entlüftungskreuz (11) und eine achsial angeordnete Rohrleitung (12) wieder abgesaugt wird.

2. Drehtrommel nach Anspruch 1 **dadurch gekennzeichnet, daß** am Umfang der Trommel mehrere Einrichtungen zum Eintragen des rieselfähigen Feststoffes mit den entsprechend wirkenden Klappen (4.9) vorhanden sind.

3. Drehtrommel nach Anspruch 1 und 2 **dadurch gekennzeichnet, daß** direkt am Mantel der Trommel angebrachte Schaufeln (7) den rieselfähigen Feststoff zur Austragsseite hin befördern und hier sich in entgegengesetzter Richtung wirkende Leitbleche (8) mit einem Abstand von einem halben Radius vom Mantel entfernt befestigt sind.

4. Drehtrommel nach Anspruch 1 bis 3 **dadurch gekennzeichnet, daß** die Entlüftungsleitung feststehend angeordnet ist, sich im Bereich des Einlaufes des Feststoffes befindet und ein in den feststofffreien Bereich der Trommel führendes radiales Rohrstück (11) mit einem nach unten gerichteten Krümmer und nachfolgend ein achsiales Rohrstück (12) besitzt.

## Claims

1. A rotary drum for aerobic heating of a pourable solid, in which the still damp solid is constantly revolved and fresh air is supplied, **characterized in that** the solid at the inlet side of the rotary drum (1) enters an antechamber (4.3) through a funnel (4.1) and a central opening (4.2), said antechamber being bounded by an outer side wall (4.4) and an inner side wall (4.5) located behind and spaced from the outer side wall, and that an inlet channel (4.6) provided between these side walls on the wall of the rotary drum (1) picks up the solid in the direction of rotation, and that, in the inner side wall (4.5), there is an opening (4.7) which leads to a chamber (4.8) located in the interior of the drum, said opening being covered by a flap (4.9) which opens into the interior of the drum, which flap only opens when the chamber (4.8) is in the region of the rotary drum (1), in which no pourable solid is present, and closes again before it re-enters the solid, the fresh air being sucked in through a ring-shaped discharge weir (9) for the pourable solids and being sucked off again through a ventilating cross-joint (11) located in the vicinity of the filling device (4) and an axially arranged pipe (12).

2. The rotary drum according to claim 1, **characterized in that** several devices incorporating the correspondingly effective flaps (4.9) are provided around the periphery of the drum for charging the pourable solid.

3. The rotary drum according to claims 1 and 2, **characterized in that** blades (7) directly attached to the casing of the drum advance the pourable solid towards the discharge side and guide plates (8) effective in opposite direction are fixed there at a distance of half a radius from the casing.

4. The rotary drum according to claims 1 to 3, **characterized in that** the ventilation pipe is fixedly arranged, is located in the vicinity of the inlet side for the solid and comprises a radial pipe portion (11) leading into the solid-free portion of the drum including a downwardly directed elbow portion and a succeeding axial pipe portion (12).

## Revendications

1. Tambour rotatif pour le chauffage aérobie de substance solide apte à l'écoulement, dans lequel on fait circuler en permanence la substance solide encore humide et on apporte de l'air frais, **caractérisé en ce que** la substance solide parvient, sur le côté d'entrée du tambour rotatif (1), par l'intermédiaire de la trémie (4.1) et de l'ouverture centrale (4.2) dans la préchambre (4.3), qui est délimitée par la paroi latérale extérieure (4.4) et par la paroi latérale intérieure (4.5) située à distance en arrière de la précédente, et, entre ces parois, contre la paroi du tambour rotatif (1), un canal d'admission (4.6) prend en charge la substance solide dans la direction de rotation, et une ouverture (4.7) est présente dans la paroi latérale intérieure (4.5), ouverture qui mène dans une chambre (4.8) qui se trouve à l'intérieur du tambour et qui est fermée par un volet (4.9) s'ouvrant vers l'intérieur du tambour, volet qui ne s'ouvre que lorsque la chambre (4.8) se trouve dans la région du tambour rotatif (1) dans laquelle aucune substance solide apte à l'écoulement n'est présente, et qui se referme avant que ce dernier plonge à nouveau dans la substance solide, et l'air frais est aspiré par l'intermédiaire du déversoir d'évacuation annulaire (9) pour la substance solide apte à l'écoulement, et est évacué par l'intermédiaire du raccord en croix d'évacuation d'air (11) qui se trouve dans la région du dispositif de remplissage (4), et d'une conduite (12) disposée axialement.

2. Tambour rotatif selon la revendication 1, **caractérisé en ce que** plusieurs dispositifs pour le chargement de la substance solide apte à l'écoulement, avec des volets (4.9) agissant d'une manière correspondante, sont présents sur la périphérie du tambour.

3. Tambour rotatif selon la revendication 1 ou 2, **caractérisé en ce que** des pales (7) installées directement sur l'enveloppe du tambour véhiculent la substance solide apte à l'écoulement en direction du côté d'évacuation, et des tôles de guidage (8) agissant en direction opposée y sont fixées en étant éloignées de l'enveloppe d'une distance d'un demi-rayon.

4. Tambour rotatif selon l'une des revendications 1 à 3, **caractérisé en ce que** la conduite d'évacuation d'air est disposée à poste fixe, se trouve dans la région de l'arrivée de la substance solide et possède un tronçon de tube radial (11) menant dans la région du tambour qui est dépourvue de substance solide et doté d'un coude dirigé vers le bas, suivi d'un tronçon de tube axial (12).
